Europäisches Patentamt

European Patent Office

Office européen des brevets

(11) Veröffentlichungsnummer: **0 135 898**
A2

(12) # EUROPÄISCHE PATENTANMELDUNG

(21) Anmeldenummer: **84110982.0**

(22) Anmeldetag: **14.09.84**

(51) Int. Cl.⁴: **A 01 N 37/02**

(30) Priorität: **16.09.83 DE 3333443**

(43) Veröffentlichungstag der Anmeldung: **03.04.85**
**Patentblatt 85/14**

(84) Benannte Vertragsstaaten: **AT BE CH DE FR GB IT LI LU NL SE**

(71) Anmelder: **Intermedicat GmbH, Gerliswilstrasse 45, CH-6020 Emmenbrücke (CH)**

(72) Erfinder: **Schröder, Jürgen, Dr., Auf dem Rotthell 7, D-3509 Spangenberg (DE)**
Erfinder: **Koppensteiner, Günter, Dr., Dörnbergstrasse 4, D-3508 Melsungen (DE)**

(74) Vertreter: **von Kreisler, Alek, Dipl.-Chem. et al, Deichmannhaus am Hauptbahnhof, D-5000 Köln 1 (DE)**

(54) **Desinfektionsmittel-Konzentrat auf der Basis von kurzkettigen Fettsäuren.**

(57) Gegenstand der Erfindung sind Desinfektionsmittel-Konzentrate, die unverzweigte und/oder verzweigte, gesättigte aliphatische Carbonsäuren mit 5 bis 14 C-Atomen, Emulgatoren und gegebenenfalls Wasser, sowie geringe Mengen an Geruchsstoffen, Wachsen, Polymeren und ähnlichen, die Gebrauchseigenschaften modifizierenden Zusätze enthalten.

EP 0 135 898 A2

VON KREISLER     SCHÖNWALD     EISHOLD     FUES

VON KREISLER     KELLER     SELTING     WERNER

0135898

PATENTANWÄLTE

Dr.-Ing. von Kreisler † 1973
Dr.-Ing. K. W. Eishold † 1981

Dr.-Ing. K. Schönwald
Dr. J. F. Fues
Dipl.-Chem. Alek von Kreisler
Dipl.-Chem. Carola Keller
Dipl.-Ing. G. Selting
Dr. H.-K. Werner

DEICHMANNHAUS AM HAUPTBAHNHOF
D-5000 KÖLN 1

15. Sept. 1983
AVK/sr

B. Braun Melsungen AG
308 Melsungen

DESINFEKTIONSMITTEL-KONZENTRATE AUF DER BASIS VON KURZKETTIGEN FETTSÄUREN

Gegenstand der Erfindung sind Desinfektionsmittel-Konzentrate, die unverzweigte und/oder verzweigte gesättigte aliphatische Carbonsäuren mit 5 bis 14 C-Atomen, Emulgatoren und gegebenenfalls Wasser sowie geringe Mengen an Parfümen, Wachsen, Polymeren und ähnlichen, die Gebrauchseigenschaften modifizierenden Zusätzen enthalten.

Die antimikrobielle Wirkung gesättigter und ungesättigter aliphatischer Carbonsäuren ist aus zahlreichen Publikationen bekannt. So werden in J.J. Kabara, AOCS Monograph No.5, S.1 ff. (1978) zahlreiche Arbeiten referiert und Struktur-Wirkungs-Beziehungen erläutert: Gesättigte Carbonsäuren mit 10 bis 12 C-Atomen, einfach ungesättigte Carbonsäuren mit 16 C-Atomen sowie zweifach ungesättigte Carbonsäuren mit 18 C-Atomen zeigen optimale antimikrobielle Aktivität.

Der Einfluß des pH-Wertes auf die bakterizide Wirkung bestimmter Fettsäuren ist Gegenstand einer referierenden Arbeit von J.V. Karabinos und H.J. Ferlin (J.Amer. Oil Chem. Soc. 31, 228 (1954)). Fettsäuren mit 8 bis 12 C-Atomen werden als am meisten effektiv in der Inhibierung des Wachstums von Schimmel referiert, während Carbonsäuren ungerader C-Zahlen zwischen 7 und 13 sowie ihre Natrium-Salze Verwendung als ausgezeichnete Fungistatica fanden.

In der US-PS 2 190 714 wird die Verwendung von geradkettigen und/oder verzweigten Fettsäuren mit 3 bis 12 C-Atomen als fungistatisch wirkendes Konservierungsmittel in der Nahrungsmittelindustrie beansprucht. Die US-PS 2 466 663 beschreibt den Einsatz von Octansäure und ihren Salzen bei pH-Werten von 4,5 bis 10,5 als Fungizid in Lösungen, Salben und Pudern für die Anwendung auf lebendem Gewebe, z.B. auf der Haut.

In der CA-PS 1 098 039 wird der Schutz von Infusionslösungen, die zur parenteralen Ernährung dienen, vor dem Befall durch Pilze und Bakterien durch den Zusatz freier organischer Säuren, insbesondere gesättigter oder ungesättigter Fettsäuren mit 4 bis 12 C-Atomen, beansprucht. In der US-PS 4 343 798 wird die antimikrobielle Wirksamkeit von Salben mit aliphatischen Carbonsäuren mit 5 bis 12 C-Atomen beschrieben, die allerdings zusätzlich noch Corticosteroid-Komponenten enthalten.

J.V. Karabinos et al referieren (a.a.O.) außerdem eine Studie über eine Inhibierung des bakteriellen Stoffwechsels durch verschiedene kationische und anionische Detergentien. Deren Inhibierungswirkung wird stark durch die Wasserstoffionen-Konzentration beeinflußt. Die Verfasser dieser Studie zeigten, daß anionische Detergentien ihre beste Inhibierungswirkung im sauren pH-Bereich entfalten.

Die EP-A 0 068 552 beschreibt lokal anwendbare antimikrobielle Mittel, die Fettsäuren mit 5 bis 12 C-Atomen, bevorzugt mit 8 bis 10 C-Atomen, sowie deren Salze enthalten und als wäßrige Gele und wäßrige Lotionen mit einem pH-Wert nicht größer als 5 formuliert sind.

Ein Hinweis auf die Anwendung von Fettsäuren für die Instrumentendesinfektion oder die Flächendesinfektion läßt sich der Literatur bisher nicht entnehmen.

Während für die chirurgische und hygienische Haut- und Hände-Desinfektion bisher nur alkoholische Präparate (Ethanol, n- und i-Propanol) sowie Mittel auf der Basis von PVP-Iod Bedeutung haben, die sich aufgrund ihres extrem raschen Wirkungseintritts durchsetzen konnten, ist eine sachgerechte Flächendesinfektion, die auch den entsprechenden Prüfrichtlinien der Deutschen Gesellschaft für Hygiene und Mikrobiologie (DGHM) entspricht, nach dem heutigen Stand der Technik praktisch nur mit Präparaten auf der Basis von Aldehydgemischen (Formaldehyd, Glutaraldehyd, Glyoxal), von Aldehydgemischen mit quartären Ammoniumsalzen oder von Phenolen durchzuführen. vgl. DE-OS 32 05 318, S. 3, Z. 5 ff. und Hyg. und Med. 7, 467 ff (1982). Abgesehen davon, daß diese Mittel nicht immer die den Anforderungen entsprechende Wirkung zeigen, führen ihre Dämpfe zu nicht unerheblicher Geruchsbelästigung, die sogar Irritationen oder Reizungen der Schleimhäute zur Folge haben kann.

Überraschenderweise wurde nun gefunden, daß verzweigte und/oder unverzeigte Fettsäuren in der Geschwindigkeit des Wirkungseintrittes den herkömmlichen, für die Flächen- oder Gerätedesinfektion verwendeten Mitteln ebenbürtig oder z.T sogar überlegen sind. Zudem sind sie besser verträglich und toxikologisch absolut unbedenklich. Sie können außerdem in deutlich niedrigeren Anwendungskonzentrationen im Vergleich zu bekannten Desinfektionsmitteln eingesetzt werden und weisen wesentlich bessere galenische Voraussetzungen auf.

Versucht man jedoch, lineare und/oder verzweigte, gesättigte aliphatische Fettsäuren entsprechend den für diese Zwecke vorgesehenen Richtlinien der DGHM auf ihre Wirksamkeit für die Flächen- oder Gerätedesinfektion zu prüfen, so findet man, daß die Mehrzahl von ihnen selbst in einer Konzentration von 1% in Wasser ohne weitere Zusätze für Desinfektionsaufgaben ungeeignet sind. Dies liegt in erster Linie daran, daß die Löslichkeit der Fettsäuren in Wasser bzw. in den sonstigen Prüfmedien zu gering ist, um die Auflösung einer für die Desinfektion ausreichend wirksamen Menge zu erreichen. Dieser Grund ist um so mehr ausschlaggebend, als herkömmliche, für die Flächen- oder Gerätedesinfektion angebotenen Mittel ausschließlich als Konzentrate in den Handel gebracht werden, die der Anwender unmittelbar vor der Applikation mit Wasser auf die erforderliche Anwendungskonzentration verdünnt.

Es bestand also die Aufgabe, Desinfektionsmittel-Konzentrate auf der Basis von Fettsäuren herzustellen, welche durch Verdünnen mit Wasser Zubereitungen ergeben, die nach den Richtlinien der DGHM in Wasser gelöst werden können und die die entsprechenden Anforderungen der DGHM für die Flächen- und/oder Gerätedesinfektion hinsichtlich Wirksamkeit, Reinigungswert und Toxizität erfüllen.

Diese Aufgabe wird dadurch gelöst, daß unverzweigte und/oder verzweigte, gesättigte aliphatische Carbonsäuren mit Hilfe von Emulgatoren und/oder Lösungsvermittlern in Wasser gelöst werden, so daß Konzentrate entstehen, die beim Lösen in Wasser homogene Lösungen bzw. Suspensionen ergeben.

Gegenstand der Erfindung sind somit Desinfektionsmittel-Konzentrate, die unverzweigte und/oder verzweigte, gesättigte aliphatische Carbonsäuren mit 5 bis 14 C-Atomen, Emulgatoren und gegebenenfalls Wasser sowie geringe Mengen an Parfümen, Wachsen, Polymeren und ähnlichen, die Gebrauchseigenschaften modifizierenden Zusätzen enthalten.

Als Carbonsäuren im Sinne der vorliegenden Erfindung werden unverzweigte, gesättigte aliphatische Carbonsäuren wie Valeriansäure, Capronsäure, Önanthsäure, Caprylsäure, Pelargonsäure, Caprinsäure, Undecansäure, Laurinsäure, Tridecansäure oder Myristinsäure oder auch Gemische zweier oder mehrerer dieser Säuren verwendet.

Es sind jedoch auch verzweigte, gesättigte aliphatische Carbonsäure, wie 2-Methylbuttersäure, Isovaleriansäure, 2-Methylvaleriansäure, 2-Ethylbuttersäure, Isooctansäure, Isodecansäure, Isotridecansäure wie auch vergleichbare verzweigte Carbonsäure sowie Gemische dieser Säuren oder auch Gemische verzweigter und unverzweigter aliphatischer Carbonsäuren verwendbar. Vorteilhaft lassen sich technische Gemische aliphatischer Fettsäuren mit 5 bis 14 C-Atomen einsetzen.

Die erfindungsgemäßen Desinfektionsmittel-Konzentrate enthalten die genannten Fettsäuren in einer Menge von 5 bis 95 Gew.-%, bezogen auf das fertige Konzentrat.

0135898

In bevorzugten Ausführungsformen sind die Carbonsäuren in einer Menge von 10 bis 60 Gew.-% enthalten.

Die erfindungsgemäßen Desinfektionsmittel-Konzentrate enthalten zudem Emulgatoren, mit deren Hilfe die oben genannten Fettsäuren in Wasser zu klaren Lösungen bzw. homogenen Suspensionen löslich sind. In einer bevorzugten Ausführungsform der vorgelegten Erfindung sind die Emulgatoren gleichzeitig Tenside, wodurch die Desinfektionsmittel-Konzentrate, nachdem sie auf eine für die Anwendung geeignete Konzentration verdünnt worden sind, gleichzeitig eine hohe Reinigungskraft haben.

Überraschend zeigte sich, daß bei Verwendung derartiger Emulgatoren nicht nur die Löslichkeit der genannten Fettsäuren verbessert wurde, sondern auch die keimtötende Wirkung gesteigert werden konnte.

Als Emulgatoren im Sinne der vorliegenden Erfindung können anionische, nicht-ionische und/oder kationische Tenside verwendet werden. Insbesondere finden Alkalisalze von Fettsäuren, sulfonierten Fettsäuren und/oder einen aromatischen Ring enthaltenden Sulfonsäuren Verwendung.

In einer bevorzugten Ausführungsform der Erfindung kann ein Teil der erfindungsgemäß verwendeten Fettsäuren durch Zugabe von wäßriger Alkalihydroxidlösung zum Alkalisalz der jeweiligen Fettsäure verseift werden, welche dann die Aufgabe eines Emulgators übernimmt.

Außerdem können als Emulgatoren mehrere Hydroxy-Gruppen enthaltende organische Verbindungen, beispielsweise Glycerin, sowie auch einfach- oder mehrfach-ethoxylierte Fettsäuren oder Fettamine bzw. deren Ammoniumsalze sowie auch Mischungen dieser Verbindungen eingesetzt werden. Als Verbindungen dieser Klasse werden beispielsweise Pentaoxethylstearylammoniumchlorid oder ethoxylierte Oxystearinsäure verwendet.

Die genannten Emulgatoren werden in einer Menge von 5 bis 30 Gew.-Prozenten, bezogen auf das fertige Desinfektionsmittel-Konzentrat, eingesetzt. In bevorzugten Ausführungsformen der vorliegenden Erfindung werden zwei unterschiedliche Emulgatoren der genannten Stoffklassen in einem Gewichtsverhältnis Emulgator/Co-Emulgator von 2:1 bis 10:1 eingesetzt.

Die Desinfektionsmittel-Konzentrate gemäß der vorliegenden Erfindung enthalten außerdem in geringen Mengen Duftstoffe, Wachse, Polymere und ähnliche, die Gebrauchseigenschaften der Konzentrate in der Anwendung modifizierende Zusätze.

Bei der heute üblichen Fußbodenpflege, insbesondere von Kunststoffböden, wünscht man nicht nur eine einwandfreie Reinigungswirkung des Pflegemittels, sondern ist darüber hinaus bestrebt, im gleichen Arbeitsgang einen Schutzfilm aus einer Wachs- bzw. Polymeremulsion auf den Fußboden aufzubringen. Ein besonders arbeitssparendes Desinfektionsmittel für Fußböden soll daher neben einer Reinigungswirkung auch noch zusätzlich eine Polymeremulsion für die Bildung eines Schutzfilmes enthalten. Geeignete Wachsemulsionen sind z.B. LGE-Montanwachsemulsionen (BASF), geeignete Polymerpräparate sind z.B. Licomer A 53$^R$, eine Dispersion eines Acrylat-Copolymers (Fa. Hoechst).

Die erfindungsgemäßen Desinfektionsmittel-Konzentrate lassen sich ausgezeichnet mit Leitungswasser auf jede gewünschte Anwendungskonzentration verdünnen. Es entstehen dabei überwiegend klare Lösungen.

0135898

Die keimtötende Wirkung sowohl der Konzentrate als auch der jeweiligen Verdünnungen der Konzentrate werden im Flächenversuch bzw. im Suspensionsversuch entsprechend den Richtlinien der DGHM geprüft. Dabei zeigte sich, daß Desinfektionsmittel-Konzentrate mit Carbonsäuren im Bereich von 8 bis 10 C-Atomen ein Wirkungsmaximum gegenüber Bakterien und Pilzen aufweisen. Besonders an diesen Beispielen zeigt sich auch, daß die keimtötende Wirkung der Fettsäuren durch den Zusatz von Emulgatoren überraschenderweise stark gesteigert werden kann.

Die Erfindung wird durch die nachfolgenden Beispiele näher erläutert.

Beispiele 1 bis 19

Durch Zusammenrühren der in Tabelle 1 angegebenen Inhaltsstoffe Fettsäure, Emulgator und Wasser wurden die ebenfalls in Tabelle 1 angegebenen Konzentrate hergestellt.

Tabelle 1: Desinfektionsmittel-Konzentrate der Beispiele 1-19

| Beispiel | Fettsäure | Menge (%) | Emulgator[a] (Menge in %) | Co-Emulgator[a] (Menge in %) | Wassermenge (%) |
|---|---|---|---|---|---|
| 1 | 2-Methyl-butter-säure | 30 | A (20) | - | 50 |
| 2 | Isovaleriansäure | 30 | A (20) | - | 50 |
| 3 | 2-Methylvaleriansäure | 30 | A (20) | - | 50 |

(Fortsetzung)

Tabelle 1:

| Bei-spiel | Fettsäure | Menge (%) | Emulgator[a] (Menge in %) | Co-Emulgator[a] (Menge in %) | Wasser-menge (% |
|-----------|-----------|-----------|---------------------------|------------------------------|-----------------|
| 4 | 2-Ethylbut-tersäure | 30 | A (20) | – | 50 |
| 5 | b) | 30 | A (20) | D (4) | 46 |
| 6 | 2-Ethyl-hexansäure | 30 | A (20) | – | 50 |
| 7 | Isooctan-säure | 30 | A (20) | D (3) | 47 |
| 8 | Isononan-säure | 30 | A (20) | D (5) | 45 |
| 9 | c) | 30 | A (20) | D (3) | 47 |
| 10 | c) | 60 | A (30) | – | 10 |
| 11 | c) | 95 | B ( 5) | – | – |
| 12 | Isodecan-säure | 30 | A (20) | D (5) | 45 |
| 13 | Undecan-säure | 30 | A (20) | D (2) | 48 |
| 14 | Isotridecan-säure | 30 | A (20) | E (10) | 40 |
| 15 | Caprinsäure | 30 | A (20) | E (10) | 40 |
| 16 | Caprylsäure | 5 | C (86,7) | – | 8,3 |
| 17 | c) | 60 | F (40) | – | – |
| 18 | c) | 30 | G (70) | – | – |
| 19 | c) | 60 | H (40) | – | – |

Bemerkungen zu Tabelle 1:

a) Verzeichnis der Emulgatoren und Co-Emulgatoren der Beispiele 1-16:

0135898

A Na-Dodecylbenzolsulfonat

B Dodecylbenzolsulfonsäure

C Genamin KS 5[R]: 21%ige Lösung von Pentaoxethylstearylammoniumchlorid (Hoechst)

D Na-Cumolsulfonat

E Cremophor HS 15[R]: Ethoxylierte Oxystearinsäure (BASF)

F Alkylphenol mit 8EO

G 65%ige Lösung von Natriumddisooctylsulfosuccinat Steinapol SB-DO 70[R] (Rewo)

H Kokosfettsäurediethanolamid


b) Carbonsäure -8.9.1 (Hoechst)

c) EDENOR V 85 KR: Fettsäuregemisch (60% C8 und 35% C10)(Henkel)


Beispiel 20


Keimtötende Wirkung von Verdünnungen der Konzentrate der Beispiele 1 bis 19 im Suspensionsversuch


Durch Verdünnen der Desinfektionsmittel-Konzentrate der Beispiele 1 bis 19 mit Wasser standardisierter Härte (WSH) wurden Desinfektionsmittel mit Prüfkonzentrationen entsprechend Tabelle 2, Spalte 2 hergestellt.


Die Testkeime wurden in Caseinpepton-Sojamehlpepton-Lösung vorgezüchtet und mit dem zu prüfenden Mittel vermischt. Die Ausgangskeimzahl im Desinfektionsmittel-Prüfkeim-Gemisch betrug $1 \times 10^7$ bis $5 \times 10^7$/ml.


Nach Einwirkungszeiten von 2,5, 5, 10, 20, 30 und 60 min wurden 0,1 ml aus dem Reaktionsgefäß entnommen und in Caseinpepton-Sojamehlpepton-Lösung mit Enthemmungsmittel (Tween-Lecithin-Histidin) überführt. Die keimtötende Wirkung galt als nachgewiesen, wenn in der Subkultur keine Vermehrung stattfand.

Tabelle 2 enthält die Abtötungszeiten in min, bei der erstmals keine Vermehrung in der Subkultur mehr stattfand.

Tabelle 2: Abtötungszeiten (min) im Suspensionsversuch (entspr. DGHM-Richtlinien) (Gemische der Beispiele 1-19)

| Konz. aus Beispiel | Prüfkonz. (%) | Staph. aureus | E. coli | Pseud. aerug. | Cand. alb. |
|---|---|---|---|---|---|
| 1 | 1 | 5 | 10 | 30 | 2,5 |
| 2 | 1 | 2,5 | 20 | 10 | 5 |
| 3 | 1 | 2,5 | 10 | 10 | 5 |
| 4 | 1 | 5 | 30 | 20 | 2,5 |
| 5 | 1 | 2,5 | 10 | 10 | 5 |
| 6 | 1 | 5 | 20 | 10 | 2,5 |
| 7 | 1 | 2,5 | 10 | 20 | 5 |
| 8 | 1 | 2,5 | 10 | 10 | 5 |
| 9 | 1 | 5 | 5 | 10 | 5 |
| 10 | 0,5 | 5 | 5 | 10 | 5 |
| 11 | 0,3 | 5 | 5 | 10 | 5 |
| 12 | 3 | 5 | 30 | 30 | 5 |
| 13 | 3 | 5 | 30 | 30 | 5 |
| 14 | 3 | 5 | 30 | 60 | 5 |
| 15 | 3 | 5 | 60 | 30 | 5 |
| 16 | 10 | 30 | 30 | 30 | 30 |
| 17 | 0,5 | 10 | 5 | 10 | 10 |
| 18 | 1 | 5 | 5 | 10 | 5 |
| 19 | 0,5 | 5 | 5 | 10 | 5 |

## Vergleichsbeispiele 1 - 5

In den nachfolgenden Vergleichsbeispielen 1 bis 5 wurde wie in Beispiel 20 vorgegangen. Als zu prüfende Desinfektionsmittel wurden jedoch die in der nachfolgenden Tabelle 3 angegebenen Fettsäuren in den entsprechenden Konzentrationen ohne Zugabe eines Emulgators verwendet.

Die angegebenen Abtötungszeiten (min) sind diejenigen Zeiten, in denen erstmals in der Subkultur keine Vermehrung mehr stattfand.

Tabelle 3: Abtötungszeiten (min) im Suspensionsversuch
(Vergleichsbeispiele 1 - 5)

| Vergleichs- beispiel | Carbon- säure | Konz. (%) | Staph. aureus | E. coli | Pseud. aerug. | Cand. alb. |
|---|---|---|---|---|---|---|
| 1 | 2-Methyl- buttersäure | 1 | 60 | 90 | 60 | 120 |
|  | " | 0,3 | >120 | >120 | >120 | >120 |
| 2 | Isovalerian- säure | 1 | 30 | 30 | 60 | 60 |
|  | " | 0,3 | >120 | >120 | >120 | >120 |
| 3 | 2-Ethylbut- tersäure | 1 | 30 | 60 | 60 | 60 |
|  | " | 0,3 | 120 | 120 | 120 | 120 |
| 4 | Caprylsäure | konz. | >60 | >60 | >60 | >60 |
| 5 | a) | konz. | >60 | >60 | >60 | >60 |

Bemerkungen:

a) Technisches Gemisch aus $C_8$- und $C_{10}$-Carbonsäuren

Beispiel 21

Keimtötende Wirkung von Verdünnungen der Konzentrate der Beispiele 1 bis 8 im Flächentest auf PVC

Durch Verdünnen mit Wasser standardisierter Härte (17°DH), WSH, wurden aus den Desinfektionsmittel-Konzentraten der Beispiele 1 bis 8 auf Konzentrationen entsprechend der nachfolgenden Tabelle 4, Spalte 2 Desinfektionsmittel-Lösungen hergestellt.

Die Testkeime (Staph. aureaus und E.coli) wurden auf Caseinpepton-Sojamehlpepton-Agar vorgezüchtet und mit Caseinpepton-Sojamehlpepton-Lösung abgeschwemmt.

Je 0,1 ml der Keimsuspension wurden mit einem Glasspatel auf einen 5 cm x 5 cm großen PVC-Fußbodenbelag verteilt, der nach dem Antrocknen der Testkeime mit der jeweiligen Prüflösung besprüht wurde. Nach Einwirkungszeiten von 5, 10, 20, 30 und 60 min wurde mittels Abstrichkultur auf überlebende Keime geprüft. Eine Wirksamkeit auf der PVC-Fläche galt als nachgewiesen, wenn auf den Subkulturen weniger als 10 Kolonien des Testkeimes sichtbar wurden.

In der nachfolgenden Tabelle 4 sind in Spalten 3 und 4 diejenigen Einwirkungszeiten angegeben, nach denen erstmals weniger als 10 Kolonien des Testkeimes auf den Subkulturen sichtbar wurden.

Tabelle 4: Abtötungszeiten (min) im Flächenversuch
(entspr. DGHM-Richtlinien) (Gemische der
Beispiele 1-8)

| Konz. aus Beispiel | Prüfkonzentration (%) | Testkeime | |
|---|---|---|---|
| | | Staph. aureus | E. coli |
| 1 | 1 | 30 | 30 |
| 2 | 1 | 30 | 30 |
| 3 | 1 | 30 | 30 |
| 4 | 1 | 30 | 30 |
| 5 | 1 | 30 | 30 |
| 6 | 1 | 30 | 30 |
| 7 | 1 | 30 | 30 |
| 8 | 1 | 30 | 30 |

Vergleichsbeispiele 6 - 8

Die nachfolgenden Vergleichsbeispiele 6 bis 8 wurden entsprechend Beispiel 21 durchgeführt. Es wurden jedoch zur Desinfektion nur die in der nachfolgenden Tabelle 5 angegebenen Carbonsäuren ohne Emulgatorzusatz verwendet.

Tabelle 5: Abtötungszeiten (min) im Flächenversuch
(Vergleichsversuche 6 - 8)

| Vergleichs-beispiel | Carbonsäure | Konz. (%) | Testkeime | |
|---|---|---|---|---|
| | | | Staph.aur. | E-coli |
| 6 | 2-Methylbut-tersäure | 1 | >360 | >360 |
| 7 | Isovalerian-säure | 1 | >360 | 240 |
| 8 | 2-Ethylbutter-säure | 1 | >360 | 240 |

Beispiel 22

Durch Zusammenrühren von 2 Gew.-Teilen Caprylsäure, 3 Gew.-Teilen Glycerin und 15 Gew.-Teilen und 0,5 Gew.-Teilen NaOH wurde ein Desinfektionsmittel-Konzentrat hergestellt, das mit Leitungswasser im Verhältnis 1:9 vermischt wurde. Es entstand eine trübe Caprylsäure-Emulsion mit einem pH-Wert von ca. 6,0.

Die antimikrobielle Wirkung dieser Desinfektionsmittellösung wurde im Suspensionsversuch entsprechend Beispiel 20 geprüft.

Die Abtötungszeiten gegenüber zahlreichen Testkeimen sind der nachfolgenden Tabelle 6 zu entnehmen.

Tabelle 6: Abtötungszeiten (min) im Suspensionsversuch (Bsp. 22)

| Testkeim | Abtötungszeit (min) |
|---|---|
| Staph. aureus | 5 |
| E. coli | 2,5 |
| Pseud. aerug. | 2,5 |
| Prot. vulg. | 2,5 |
| Klebs. pneum. | 2,5 |
| Cand. alb. | 2,5 |
| Asp. niger | 2,5 |
| Penic. not. | 2,5 |

Beispiel 23

Ein erfindungsgemäßes Konzentrat mit Pflegewirkung für Fußböden wird hergestellt, indem man 15% Octansäure, 2% Na-Dodecylbenzolsulfonat und 83% einer 21%igen wäßrigen Montanwachsemulsion (Handelsname LGE-Wachs, BASF) miteinander verrührt.

Wird eine 0,5%ige Lösung dieses Konzentrats entsprechend Beispiel 21 auf Desinfektionswirkung geprüft, so findet nach 30 Minuten in der Subkultur bei Staph. aureus und E. coli keine Vermehrung mehr statt. Ein analoges Desinfektionsmittelkonzentrat kann mit einer Licomer$^R$-Dispersion hergestellt werden.

0135898

<u>P a t e n t a n s p r ü c h e</u>

1. Desinfektionsmittel-Konzentrate, enthaltend
a) unverzweigte und/oder verzweigte, gesättigte aliphatische Carbonsäuren mit 5 bis 14 C-Atomen,
b) Emulgatoren und gegebenenfalls
c) Wasser sowie geringe Mengen an
d) Geruchsstoffen, Wachsen, Polymeren und ähnlichen, die Gebrauchseigenschaften modifizierenden Zusätzen.

2. Desinfektionsmittel-Konzentrate nach Anspruch 1, dadurch gekennzeichnet, daß sie Carbonsäuren in einer Menge von 5 bis 95 Gew.-%, bezogen auf das fertige Konzentrat, bevorzugt 10 bis 60 Gew.-%, enthalten.

3. Desinfektionsmittel-Konzentrate nach Ansprüchen 1 und 2, dadurch gekennzeichnet, daß sie als Emulgatoren anionische, nicht-ionische und/oder kationische Tenside in einer Menge von 5 bis 30 Gew.-Prozenten, bezogen auf das fertige Konzentrat, enthalten.

4. Desinfektionsmittel-Konzentrate nach Anspruch 3, dadurch gekennzeichnet, daß sie Alkalisalze von Fettsäuren, Alkylsulfonsäuren und/oder Alkarylsulfonsäuren sowie deren Mischungen als Emulgatoren enthalten.

5. Desinfektionsmittel-Konzentrate nach Ansprüchen 1 und 2, dadurch gekennzeichnet, daß sie als Emulgatoren mehrere Hydroxy-Gruppen enthaltende organische Verbindungen und/oder einfach oder mehrfach ethoxylierte Fettsäuren und/oder Fettamine und/oder deren Ammoniumsalze enthalten.

- 18 -

0135898

6. Desinfektionsmittel-Konzentrate nach Ansprüchen 1 bis 5, dadurch gekennzeichnet, daß ihre wäßrigen Lösungen einen pH-Wert im Bereich von 2,5 bis 7,0 haben.